(19) Europäisches Patentamt
European Patent Office
Office européen des brevets

(11) **EP 4 309 820 A1**

(12) **EUROPEAN PATENT APPLICATION**
published in accordance with Art. 153(4) EPC

(43) Date of publication:
**24.01.2024 Bulletin 2024/04**

(21) Application number: **22798899.5**

(22) Date of filing: **26.04.2022**

(51) International Patent Classification (IPC):
**B21D 22/26** (2006.01)  **B62D 21/15** (2006.01)
**B21C 37/15** (2006.01)

(52) Cooperative Patent Classification (CPC):
**C21D 7/10; B21C 37/15; B62D 21/15; C21D 8/005;**
B21D 22/20; B21D 47/01; B21D 53/88; C21D 1/76;
C21D 3/04

(86) International application number:
**PCT/JP2022/018966**

(87) International publication number:
**WO 2022/234793 (10.11.2022 Gazette 2022/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.05.2021  JP 2021078462**

(71) Applicant: **NIPPON STEEL CORPORATION**
**Chiyoda-ku**
**Tokyo 100-8071 (JP)**

(72) Inventors:
• **AITOH, Takahiro**
**Tokyo 100-8071 (JP)**
• **TAKEDA, Kengo**
**Tokyo 100-8071 (JP)**
• **NAKANO, Katsuya**
**Tokyo 100-8071 (JP)**
• **TODA, Yuri**
**Tokyo 100-8071 (JP)**

(74) Representative: **Zimmermann & Partner**
**Patentanwälte mbB**
**Postfach 330 920**
**80069 München (DE)**

(54) **FRAMEWORK MEMBER**

(57)   Provided is a frame member formed by cold-pressing a steel sheet. The frame member has a closed cross section portion in which a cross section perpendicular to a longitudinal direction is a closed cross section, and the closed cross section portion has at least one flat part having a radius of curvature larger than a maximum external dimension of the cross section. A Vickers hardness of a thickness middle portion in a reference flat part is 300 Hv or greater, a width of the reference flat part is 2.0 times or less the effective width, and a standard deviation ratio obtained by dividing a standard deviation of hardness frequency distribution in a surface layer portion in the reference flat part by a standard deviation of hardness frequency distribution in the thickness middle portion in the reference flat part is greater than 1.0.

FIG. 3

**Description**

[Technical Field of the Invention]

The present invention relates to a frame member having excellent energy absorption efficiency.
Priority is claimed on Japanese Patent Application No. 2021-078462, filed on May 6, 2021, the content of which is incorporated herein by reference.

[Related Art]

In the related art, a hollow member obtained by processing a steel sheet into a predetermined closed cross-sectional shape has been used as a frame member of a vehicle. Such a frame member is required to realize the weight reduction and to exhibit a sufficient proof stress and energy absorption performance in a case where an input load in an axial direction is applied thereto due to a collision.
Examples of the method primarily used for realizing the weight reduction include a method of reducing the weight by thinning a member by an increase in the proof stress and energy absorption performance due to an increase of the strength of a steel sheet. Therefore, in recent years, a cold-rolled steel sheet having a tensile strength of 980 MPa or greater may be used as a material of a frame member.
Patent Document 1 discloses a collision-proof reinforcing member for a vehicle which is formed of a formed thin sheet to increase buckling resistance, including at least a main body portion and a pair of side wall portions integrated with the main body portion via folding portions, in which the main body portion is provided with a recessed bead extending in a center of the main body portion in a width direction along a longitudinal direction of the main body portion, and the recessed bead is provided so that an effective width c' as a distance between the recessed bead and the folding portion satisfies a specific range.

[Prior Art Document]

[Patent Document]

[Patent Document 1] Japanese Unexamined Patent Application, First Publication No. 2009-286351

[Disclosure of the Invention]

[Problems to be Solved by the Invention]

According to the technology of Patent Document 1, the bead is provided in consideration of the effective width, and thus it is possible to suppress elastic buckling and to improve the proof stress. However, in order to reduce the weight by further thinning, it is required to take measures for further increasing the energy absorption efficiency which is the amount of energy absorbed per unit cross-section area of the frame member.
The present invention has been made in view of the above problems, and an object of the present invention is to provide a frame member having excellent energy absorption efficiency.

[Means for Solving the Problem]

Specific aspects of the present invention are as described below.

(1) A first aspect of the present invention is a frame member formed by cold-pressing a steel sheet, in which the frame member has a closed cross section portion in which a cross section perpendicular to a longitudinal direction is a closed cross section, the closed cross section portion has at least one flat part having a radius of curvature larger than a maximum external dimension of the cross section, and when a flat part among the at least one flat part, having such a width that a ratio of the width to an effective width obtained from Karman's effective width formula is maximum, is defined as a reference flat part, a Vickers hardness of a thickness middle portion in the reference flat part is 300 Hv or greater, a width of the reference flat part is 2.0 times or less the effective width, and a standard deviation ratio obtained by dividing a standard deviation of hardness frequency distribution in a surface layer portion in the reference flat part by a standard deviation of hardness frequency distribution in the thickness middle portion in the reference flat part is greater than 1.0.
(2) In the frame member according to (1), the closed cross section portion may be present in 50% or greater of a whole length of the frame member in the longitudinal direction.

(3) In the frame member according to (1) or (2), the frame member may include a first frame member extending in the longitudinal direction and a second frame member extending in the longitudinal direction and joined to the first frame member, and the closed cross section portion may include the first frame member and the second frame member.

(4) In the frame member according to any one of (1) to (3), the standard deviation ratio may be greater than 1.20.

[Effects of the Invention]

According to the above aspect, in a case where the width and the hardness standard deviation ratio are controlled within appropriate ranges in the reference flat part, it is possible to prevent the fracture during bellows deformation due to a load in an axial direction while suppressing elastic buckling. Accordingly, a high degree of energy absorption performance can be obtained even in a case where a high-strength thin member is used. Accordingly, it is possible to exhibit excellent energy absorption efficiency.

[Brief Description of the Drawings]

FIG. 1 is a schematic diagram for explaining an amount of energy absorbed.
FIG. 2 is a perspective view showing a frame member 10 according to one embodiment of the present invention.
FIG. 3 is a cross-sectional view along the cutting-plane line A1-A1 of FIG. 2.
FIG. 4 is a graph showing a relationship between a hardness standard deviation ratio and a VDA bending angle ratio in a VDA bending test with respect to a cold-rolled steel sheet having a tensile strength of 980 MPa or greater.
FIG. 5 is a perspective view showing a frame member 20 according to a modification example.
FIG. 6 is a cross-sectional view along the cutting-plane line A2-A2 of FIG. 5.
FIG. 7 is a perspective view showing a vehicle frame 100 as an example to which a structural member is applied.
FIG. 8 is a schematic view for explaining a cross-sectional shape of a rectangular tube member used in examples.
FIG. 9 is a graph in which a relationship between an effective width ratio and energy absorption efficiency in experimental examples is plotted.

[Embodiments of the Invention]

The present inventors intensively studied the configuration of a frame member capable of exhibiting excellent energy absorption efficiency.
First, in order to exhibit excellent energy absorption efficiency, it is important that the frame member has a proof stress of a certain level or higher. In a case where an input load in an axial direction is applied due to a collision, elastic buckling may occur in a flat part in the initial stage of deformation. In a case where elastic buckling occurs, a required proof stress may not be obtained, and excellent energy absorption efficiency may not be exhibited.
In addition, in order to exhibit excellent energy absorption efficiency, it is also important that the frame member realizes folding deformation in a desired deformation mode immediately after an input load in an axial direction is applied thereto due to a collision, in order to efficiently absorb impact energy. In particular, in a case where fracture (fracture at a folded portion) occurs during bellows deformation due to the load in the axial direction, excellent energy absorption efficiency may not be exhibited.
Accordingly, it can be said that in a case where a cross section where elastic buckling hardly occurs in a flat part is designed and high bending performance can be imparted so that fracture hardly occurs, excellent energy absorption efficiency can be exhibited.
Here, in a case where the member is increased in strength and thinned as a method for realizing the weight reduction, the following problems occur.

· Due to the thinning, elastic buckling is likely to occur in a flat part of the member, whereby it becomes difficult to obtain a necessary proof stress.
· Due to the increase of the strength, the bending performance of the steel sheet is reduced, and fracture is likely to occur in a folded portion after the start of deformation. Therefore, it becomes difficult to efficiently absorb impact energy.

The present inventors paid attention to the fact that the above-described problems hinder a further increase of the strength and thinning of a high strength steel sheet.
The present inventors further conducted studies, and found that in a case where the width and the hardness standard deviation ratio are controlled within appropriate ranges in a reference flat part, it is possible to prevent the fracture during bellows deformation due to a load in an axial direction while suppressing elastic buckling. The present inventors found that thanks to such control, it is possible to solve the above-described problems which may occur in using a high strength steel sheet, and to exhibit excellent energy absorption efficiency, and completed the present invention.

Hereinafter, a frame member 10 according to a first embodiment of the present invention contrived based on the above findings will be described.

In the present specification and the drawings, constituent elements having substantially the same functional configuration are designated by the same reference numerals to avoid duplicating description.

First, terms and phrases in the present specification will be described.

The "longitudinal direction" means a member axis direction of a frame member, that is, a direction in which the axis extends.

The "flat part" means a linear part in a cross section perpendicular to the longitudinal direction of the frame member, specifically, a part having a radius of curvature larger than a maximum external dimension of the cross section. The maximum external dimension means the maximum straight line length between end portions at two arbitrary points in the cross section.

The "corner part" means a non-linear part excluding the flat part in the cross section perpendicular to the longitudinal direction of the frame member.

The "width" means a line length along the circumferential direction of a closed cross section portion, and the "width of the flat part" means a line length between one end and the other end of the flat part.

The "effective width" is an effective width $W_e$ obtained from Formula (1) based on Karman's effective width theory, that is, Karman's effective width formula.

$$w_e = t \sqrt{\frac{4\pi^2 E}{12(1-v^2)\sigma_y}} \qquad \dots \text{Formula (1)}$$

Here, the meanings of the symbols are as follows.

$\sigma_y$: Yield stress (MPa) of flat part
E: Young's modulus (MPa) of flat part
t: sheet thickness (mm) of flat part
v: Poisson's ratio of flat part

In addition, in the steel sheet, as the Young's modulus of the flat part and the Poisson's ratio of the flat part, general physical property values may be used, and by replacing the yield stress of the flat part with the Vickers hardness of the thickness middle portion, the effective width $W_e$ can be obtained from Expression $W_e = 577\ t/\sqrt{h}$.

Here, the meanings of the symbols are as follows.

t: sheet thickness (mm) of flat part
h: Vickers hardness (Hv) of thickness middle portion of flat part

In a case where it is difficult to obtain the effective width $W_e$ from Formula (1), the effective width $W_e$ can be obtained from the above expression.

The "effective width ratio" is a ratio of a width W of the flat part to the effective width $W_e$, and is a value calculated by $W/W_e$. It can be said that the smaller the value of the effective width ratio, the more hardly the elastic buckling occurs in the cross-sectional shape.

The "reference flat part" means a flat part where the effective width ratio is maximum in the flat part of the closed cross section portion in an optional position in the longitudinal direction.

The "surface layer portion" means a region between: a depth position where a distance from a surface of the steel sheet to the depth position separated therefrom in the sheet thickness direction is 1% of the sheet thickness of the steel sheet; and a depth position where a distance from the surface of the steel sheet to the depth position separated therefrom in the sheet thickness direction is 5% of the sheet thickness of the steel sheet.

The "thickness middle portion" means a depth position where a distance from the surface of the steel sheet to the depth position separated therefrom in the sheet thickness direction of the steel sheet is 3/8 of the sheet thickness.

The "surface of the steel sheet" set as the reference of the depth position means a surface of a base steel sheet. For example, in a case where the steel sheet is plated or painted, or rust or the like is formed thereon, the surface of the steel sheet in a state where the plating, painting, and rust have been removed is set as the reference of the depth position. In a case where a surface layer coating such as plating, painting, rust, or the like is formed on the surface of the base steel sheet, the boundary between the surface layer coating and the surface of the base steel sheet is easily identified by various known methods.

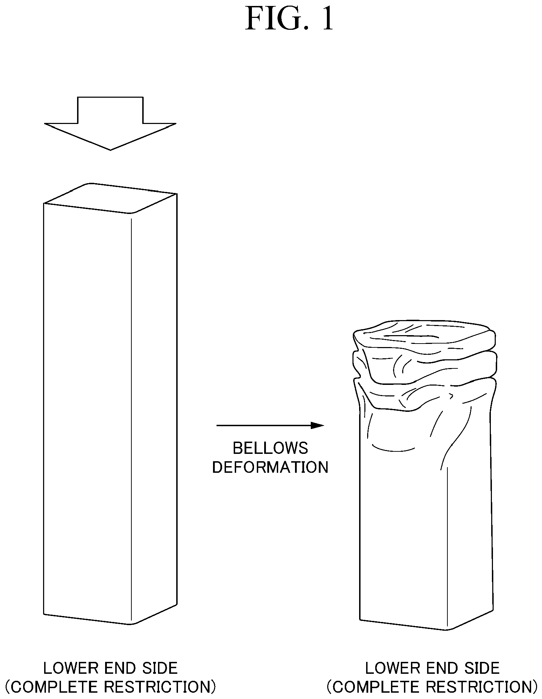

The "amount of energy absorbed" is an amount of energy absorbed calculated from the relationship between the impactor reaction force (load) and the stroke when the frame member is subjected to bellows deformation. Regarding the impactor reaction force (load) and the stroke, in a state in which the frame member is disposed so that the longitudinal direction thereof is in the vertical direction, and a lower end side is completely restricted as shown in FIG. 1, a rigid flat impactor is allowed to collide with the frame member in a direction of the white arrow from the upper end side, and thus the impactor reaction force and the stroke can be obtained.

The "energy absorption efficiency" is an amount of energy absorbed per cross-section area (sheet thickness $\times$ cross section line length) of the frame member. In a case where the frame member does not have a uniform cross section in the longitudinal direction, the energy absorption efficiency is an amount of energy absorbed per cross-section area (sheet thickness $\times$ cross section line length) in a closed cross section where the cross-section area (sheet thickness $\times$ cross section line length) is minimum in a closed cross section perpendicular to the longitudinal direction of the member.

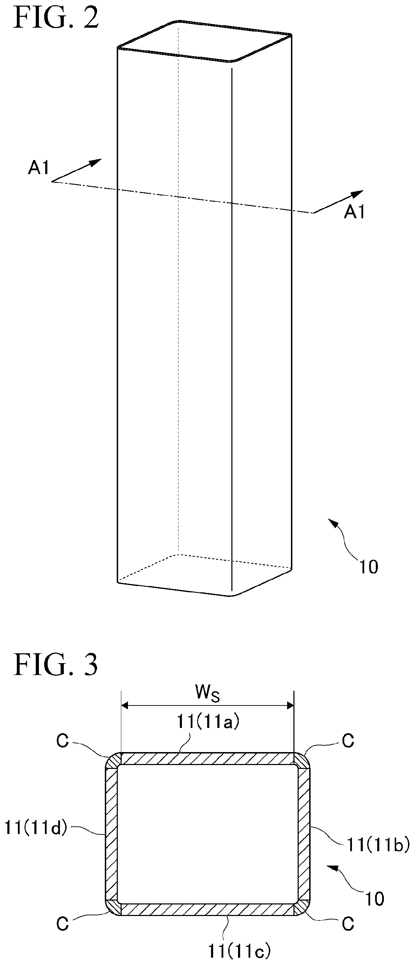

FIG. 2 is a perspective view of the frame member 10. The frame member 10 is a member having a hollow tube shape extending in the longitudinal direction.

FIG. 3 is a cross-sectional view along the cutting-plane line A1-A1 of FIG. 2. As shown in FIG. 3, the frame member 10 has a substantially rectangular closed cross section portion formed by four flat parts 11 and four corner parts C.

Specifically, the closed cross section portion is formed by being provided with a first flat part 11a, a second flat part 11b which is connected to the first flat part 11a via a corner part C, a third flat part 11c which is connected to the second flat part 11b via a corner part C, and a fourth flat part 11d which is connected to the third flat part 11c via a corner part C, and by connecting the fourth flat part 11d to the first flat part via a corner part C.

All the four corner parts C have the same radius of curvature r. For example, in a case where the maximum external dimension is 140 mm, the radius of curvature r may be 140 mm or less. The radii of curvature of the four corner parts C do not need to be the same, and may be different from each other. The upper limit of the radius of curvature is not particularly specified. However, a part having a radius of curvature larger than the maximum external dimension of the cross section is not regarded as a corner part, but as a separate flat part or a part of an adjacent flat part. Therefore, it can be said that the upper limit of the radius of curvature of the corner part C is substantially "less than the maximum external dimension of the cross section".

In the present application, the reference flat part is defined as a flat part where the effective width ratio is maximum in the flat part of the closed cross section portion.

The first flat part 11a, the second flat part 11b, the third flat part 11c, and the fourth flat part 11d all have the same yield stress $\sigma_y$, Young's modulus E, sheet thickness t, and Poisson's ratio v.

Accordingly, the effective width ratio in each flat part 11 calculated by width W/effective width $W_e$ is determined depending only on the width W of each flat part 11.

Therefore, in the present embodiment, the first flat part 11a and the third flat part 11c having the largest width W in the closed cross section portion are set as the reference flat parts.

In the reference flat part, when the frame member 10 receives a compression force in the axial direction, elastic buckling is most likely to occur in the initial stage of deformation. Accordingly, in a case where a width Ws of the reference flat part is too large, a required proof stress cannot be obtained, and it becomes difficult to exhibit excellent energy absorption efficiency. Accordingly, the upper limit of the width Ws of the reference flat part is set to 2.0 times or less the effective width $W_e$.

The lower limit of the width Ws of the reference flat part is not particularly set. However, in a case where the width Ws of the reference flat part is too small, the area of the closed cross section portion of the frame member 10 is reduced, and it becomes difficult to ensure the proof stress.

Accordingly, the width Ws of the reference flat part is preferably 0.1 times or greater the effective width $W_e$.

The sheet thickness of the reference flat part is preferably 4.2 mm or less from the viewpoint of weight reduction.

Meanwhile, in a case where the sheet thickness of the reference flat part is less than 0.4 mm, elastic buckling is likely to occur in the reference flat part, and thus the limitation of the setting range of the width Ws of the reference flat part is increased. Accordingly, the sheet thickness of the reference flat part is preferably 0.4 mm or greater.

The frame member 10 is formed by forming a steel sheet having a tensile strength of 980 MPa or greater into a predetermined shape by press forming and by then joining end surfaces together. The frame member 10 formed as described above has a strength of 980 MPa or greater in terms of tensile strength. In addition, since the frame member is formed as described above, the Vickers hardness of the thickness middle portion of the reference flat part in the frame member 10 is 300 Hv or greater in a hardness test performed by the method described in JIS Z 2244: 2009 with a test load of 300 gf (2.9 N).

In the present application, since excellent energy absorption efficiency is exhibited by increasing the deformability on the premise of an increase of the strength, the hardness of the thickness middle portion of the reference flat part is specified to be 300 Hv or greater in terms of Vickers hardness.

The upper limit of the hardness of the thickness middle portion is not particularly specified, but may be 900 Hv or less in terms of Vickers hardness.

A method of measuring the hardness of the thickness middle portion is as follows.

A sample having a cross section perpendicular to the sheet surface is collected from the frame member. The cross section is prepared as a measurement surface, and the measurement surface is subjected to a hardness test.

The size of the measurement surface depends on the measuring apparatus, but may be about 10 mm $\times$ 10 mm.

The method of preparing the measurement surface is performed according to JIS Z 2244: 2009. After the measurement surface is polished using silicon carbide paper ranging from #600 to #1500, the measurement surface is mirror-finished using a liquid obtained by dispersing a diamond powder having a particle size of 1 $\mu$m to 6 $\mu$m in a dilution liquid such as alcohol or pure water. The hardness test is performed by the method disclosed in JIS Z 2244: 2009. Hardness is measured using a micro-Vickers hardness tester at 30 points that are arranged at intervals of three times or more the indentation under a load of 300 gf in the position at a depth of 3/8 of the sheet thickness of the sample, and the average value of the measured values is defined as the hardness of the thickness middle portion.

As described above, in a case where the width Ws of the reference flat part is 2.0 times or less the effective width $W_c$, elastic buckling can be suppressed. However, in a high-strength material, e.g., a cold-rolled steel sheet having a tensile strength of 980 MPa or greater, in a case where the bending performance is insufficient, fracture occurs during bellows deformation due to a load in an axial direction even in a case where elastic buckling can be suppressed by controlling the effective width $W_c$, whereby excellent energy absorption efficiency cannot be obtained.

In the related art, the standard deviation of hardness frequency distribution in the thickness middle portion and the standard deviation of hardness frequency distribution in the surface layer portion in the reference flat part are almost the same, and the hardness standard deviation ratio is 1.0.

However, in the frame member 10 according to the present embodiment, the bending performance is increased by appropriately controlling the ratio between the standard deviation of hardness frequency distribution in the thickness middle portion and the standard deviation of hardness frequency distribution in the surface layer portion in the reference flat part.

Accordingly, even in a case where a high-strength material is applied, fracture during bellows deformation is suppressed, and it is possible to exhibit significantly excellent energy absorption efficiency compared to the related art.

Specifically, in the frame member 10 according to the present embodiment, the hardness standard deviation ratio which is a value obtained by dividing the standard deviation of hardness frequency distribution in the surface layer portion by the standard deviation of hardness frequency distribution in the thickness middle portion in the reference flat part is controlled to be greater than 1.0.

The present inventors have found through experiments that in a case where the hardness standard deviation ratio is greater than 1.0 in applying a cold-rolled steel sheet having a tensile strength of 980 MPa or greater, the maximum bending angle in a VDA bending test based on the VDA standard (VDA238-100) specified by the German Association of the Automotive Industry can be considerably improved.

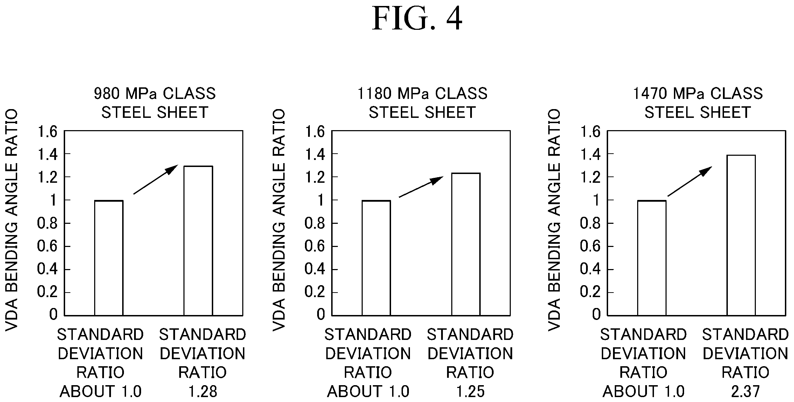

FIG. 4 includes graphs showing the results of the VDA bending tests using cold rolled steel sheets of 1470 MPa-grade, 1180 MPa-grade, and 980 MPa-grade with a thickness of 1.6 mm respectively. In each strength grade, it is found that in a case that the hardness standard deviation ratio of the steel sheet is greater than 1.0, the maximum bending angle (°) in the VDA bending test becomes large and the VDA angle ratio becomes high, with respect to the conventional steel sheet in which the hardness standard deviation ratio is 1.0. That is, in a case where the hardness standard deviation ratio is greater than 1.0, fracture hardly occurs during bellows deformation due to a load in an axial direction, and excellent energy absorption efficiency can be exhibited.

Accordingly, the hardness standard deviation ratio is preferably greater than 1.05, and more preferably greater than 1.20.

If the hardness standard deviation ratio is larger than 3.0, the bendability increase effect is saturated. Accordingly, the hardness standard deviation ratio is preferably 3.0 or less.

Here, the hardness frequency distribution in the thickness middle portion and the hardness frequency distribution in the surface layer portion are acquired by a Vickers hardness test.

A sample having a cross section perpendicular to the sheet surface is collected from the frame member. The cross section is prepared as a measurement surface, and the measurement surface is subjected to a hardness test.

The size of the measurement surface depends on the measuring apparatus, but may be about 10 mm $\times$ 10 mm.

The method of preparing the measurement surface is performed according to JIS Z 2244: 2009.

After the measurement surface is polished using silicon carbide paper ranging from #600 to #1500, the measurement surface is mirror-finished using a liquid obtained by dispersing a diamond powder having a particle size of 1 $\mu$m to 6 $\mu$m in a dilution liquid such as alcohol or pure water.

The measurement surface mirror-finished as described above is subjected to the hardness test by the method described in JIS Z 2244: 2009.

The hardness in the surface layer portion is measured using a micro-Vickers hardness tester.

Hardness is measured at 30 points that are arranged at intervals of three times or more the indentation under a load of 300 gf, and the hardness frequency distribution in the surface layer portion is obtained.

Similarly, in the depth position of 3/8 of the sheet thickness, hardness is measured at 30 points that are arranged at intervals of three times or more the indentation under a load of 300 gf, and the hardness frequency distribution in the thickness middle portion is obtained.

In addition, a known statistical method is used to obtain the standard deviations of the hardness frequency distribution in the surface layer portion and the hardness frequency distribution in the thickness middle portion, obtained as a result of the Vickers hardness test described above.

In a case where the metallographic structure is the same in a thickness middle portion and a surface layer portion of a cold-rolled steel sheet having a tensile strength of 980 MPa or greater as in the related art, the hardness frequency distribution in the surface layer portion is the same as the hardness frequency distribution in the thickness middle portion, and the hardness standard deviation ratio is 1.0.

Meanwhile, in a case where the metallographic structure in only the surface layer portion and the vicinity thereof is modified, the hardness standard deviation ratio becomes a value different from 1.0.

In the frame member 10 formed of a cold-rolled steel sheet having a tensile strength of 980 MPa or greater according to the present embodiment, in a case where the metallographic structure in only the surface layer portion and the vicinity thereof is modified, the metallographic structure in the surface layer portion becomes a structure close to a dual-phase structure, whereby the distribution and unevenness of the hardness in the surface layer portion are increased, and the hardness standard deviation ratio between the surface layer portion and the thickness middle portion can be made greater than 1.0.

Specifically, the hardness standard deviation ratio can be controlled by adjusting a highest heating temperature and a holding time in decarburization annealing of the steel sheet, which is a known technology. As for preferable conditions of the decarburization annealing, the decarburization annealing temperature (maximum attainment temperature of the steel sheet) is 700°C to 950°C, and the residence time in a temperature range of 700°C to 950°C is 5 seconds to 1,200 seconds under a moist atmosphere containing hydrogen, nitrogen, or oxygen.

In addition, in a case where the annealing temperature is set to a higher temperature range and the residence temperature is narrowed to a longer time range within the above condition ranges, the hardness standard deviation ratio can be made greater than 1.20.

At least one surface layer portion of the frame member 10 may satisfy the above hardness standard deviation ratio condition. However, it is preferable that the surface layer portions on both sides of the frame member 10 satisfy the above hardness standard deviation ratio condition.

As described above, according to the frame member 10 of the present embodiment, in the reference flat part, elastic buckling is suppressed by controlling the width Ws of the reference flat part, and fracture during bellows deformation can be suppressed by controlling the hardness standard deviation ratio.

Accordingly, the energy absorption efficiency can be significantly improved while the thickness middle portion of the reference flat part has sufficient hardness of 300 Hv or greater in terms of Vickers hardness.

Although the preferable embodiments of the present invention have been described in detail with reference to the accompanying drawings, the present invention is not limited to such examples.

It is apparent that a person having common knowledge in the technical field to which the present invention belongs is able to devise various changes or modifications within the scope of the technical idea of the present application, and it should be understood that such examples belong to the technical scope of the present invention as a matter of course.

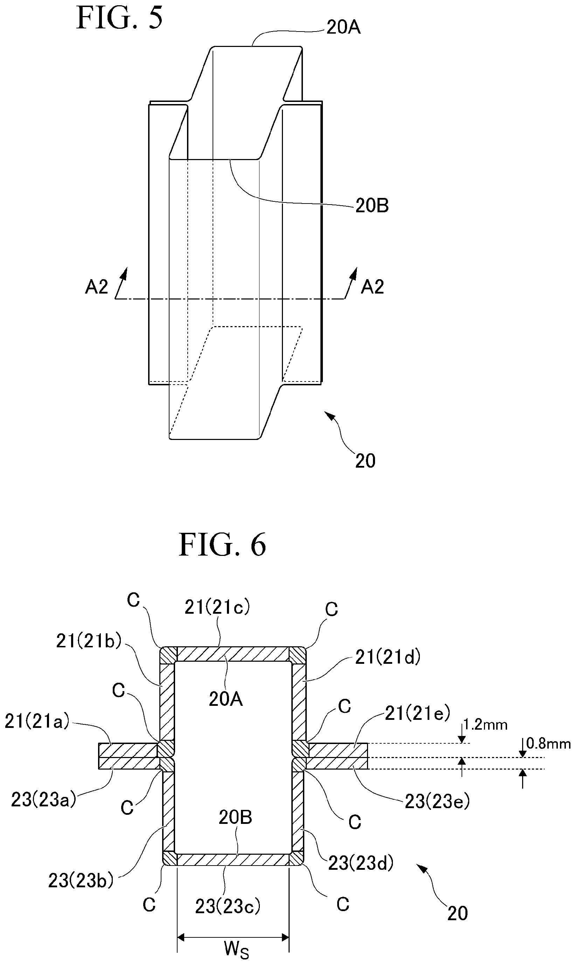

For example, the frame member 10 described above is formed of a single member, but may be formed of a plurality of members. FIG. 5 is a perspective view showing a frame member 20 according to a modification example, and FIG. 6 is a cross-sectional view along the cutting-plane line A2-A2 of FIG. 5.

The frame member 20 includes a first frame member 20A extending in a longitudinal direction and a second frame member 20B extending in the longitudinal direction and joined to the first frame member 20A. A closed cross section portion is formed by the first frame member 20A and the second frame member 20B.

The first frame member 20A is a member having an open cross section, which is provided by subjecting a steel sheet having a sheet thickness of 1.2 mm to cold-press forming so that the cross section perpendicular to the longitudinal direction has a substantially hat shape.

As shown in FIG. 6, a cross section portion of the first frame member 20A perpendicular to the longitudinal direction is provided with five flat parts 21 and four corner parts C.

Specifically, the cross section portion of the first frame member 20A perpendicular to the longitudinal direction is provided with a first flat part 21a, a second flat part 21b which is connected to the first flat part 21a via a corner part C, a third flat part 21c which is connected to the second flat part 21b via a corner part C, a fourth flat part 21d which is connected to the third flat part 21c via a corner part C, and a fifth flat part 21e which is connected to the fourth flat part 21d via a corner part C.

The second frame member 20B is a member having an open cross section, which is provided by subjecting a steel sheet having a sheet thickness of 0.8 mm to cold-press forming so that the cross section perpendicular to the longitudinal direction has a substantially hat shape.

As shown in FIG. 6, a cross section portion of the second frame member 20B perpendicular to the longitudinal direction is provided with five flat parts 23 and four corner parts C.

Specifically, the cross section portion of the second frame member 20B perpendicular to the longitudinal direction is provided with a first flat part 23a, a second flat part 23b which is connected to the first flat part 23a via a corner part C, a third flat part 23c which is connected to the second flat part 23b via a corner part C, a fourth flat part 23d which is connected to the third flat part 23c via a corner part C, and a fifth flat part 23e which is connected to the fourth flat part 23d via a corner part C.

In addition, the first flat part 21a and the fifth flat part 21e of the first frame member 20A are joined to the first flat part 23a and the fifth flat part 23e of the second frame member 20B by spot welding.

With such a configuration, the frame member 20 has a closed cross section portion in the cross section perpendicular to the longitudinal direction.

In the present application, the reference flat part is defined as a flat part where the effective width ratio is maximum in the flat part of the closed cross section portion.

The flat part 21 of the first frame member 20A and the flat part 23 of the second frame member 20B all have the same yield stress $\sigma_y$, Young's modulus E, and Poisson's ratio v. Accordingly, the effective width ratios in the flat parts 21, 23 calculated by width W/effective width $W_c$ are determined depending on the width W and the sheet thickness t of the flat parts 21, 23.

In this closed cross section portion, the third flat part 21c of the first frame member 20A and the third flat part 23c of the second frame member 20B both are flat parts having the maximum width among all the flat parts. However, since the third flat part 23c of the second frame member 20B has a smaller sheet thickness than the third flat part 21c of the first frame member 20A, the third flat part 23c of the second frame member 20B has the largest effective width ratio. Accordingly, the third flat part 23c of the second frame member 20B is the reference flat part.

Accordingly, in the frame member 20 according to the modification example, by controlling the Vickers hardness of the thickness middle portion to 300 Hv or greater, controlling the width $W_s$ to 2.0 times or less the effective width $W_e$, and controlling the standard deviation ratio to a value greater than 1.0 in the third flat part 23c of the second frame member 20B which is the reference flat part, excellent energy absorption efficiency can be exhibited.

The frame member 10 has a substantially rectangular cross-sectional shape in which the sides facing each other have the same width, but may have a substantially square cross-sectional shape in which the four flat parts 11 have the same width.

The number of the flat parts 11 is not particularly limited, and may be at least one.

In addition, the frame member 10 according to the embodiment has a uniform cross-sectional shape over the whole length, but may not have a uniform cross-sectional shape over the whole length. A closed cross section where the cross-section area (sheet thickness × cross section line length) is minimum in the closed cross section perpendicular to the longitudinal direction of the member may be the above-described closed cross section portion, and may be present in a part of the whole length in the longitudinal direction. The closed cross section portion is present in preferably 50% or greater, and more preferably 80% or greater of the whole length in the longitudinal direction.

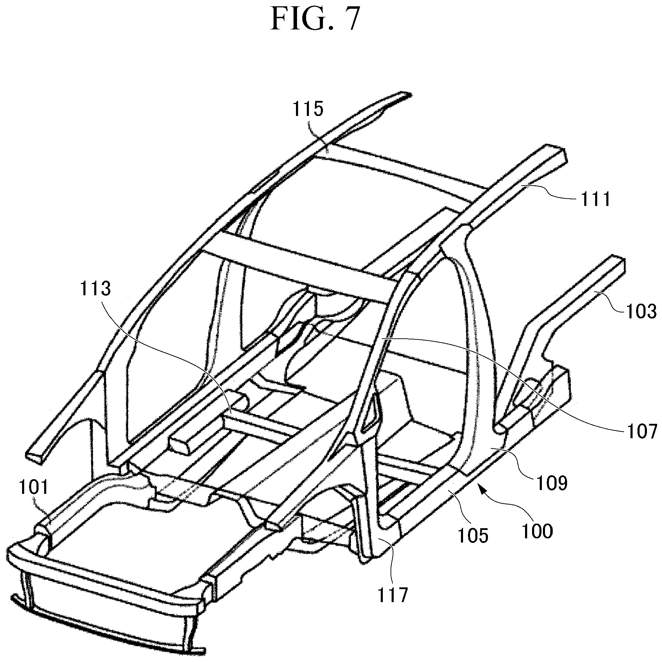

The frame members 10, 20 are applied to members to which a compression input is to be applied mainly in the axial direction at the time of the collision, among structural members of a vehicle body. FIG. 7 is a view showing a vehicle frame 100 as an example to which the frame members 10, 20 are applied.

Referring to FIG. 7, the frame members 10, 20 can be applied to a frontside member 101, a rearside member 103, a side sill 105, an A pillar 107, a B pillar 109, a roof rail 111, a floor cross 113, a roof cross 115, and an under reinforcement 117 among structural members of a vehicle body.

(Examples)

A steel sheet A and a steel sheet B of 1470 MPa-grade having a sheet thickness of 1.6 mm, a steel sheet C of 1180 MPa-grade having a sheet thickness of 1.6 mm, and a steel sheet D of 980 MPa-grade having a sheet thickness of 1.6 mm were prepared.

In decarburization annealing of the steel sheet B, the steel sheet C, and the steel sheet D, the decarburization annealing temperature (maximum attainment temperature of the steel sheet) was set to 700°C to 900°C, and the residence time in a temperature range of 700°C to 900°C was set to 60 to 600 seconds under a moist atmosphere provided by mixing hydrogen and nitrogen, to modify the metallographic structure in only a surface layer portion and the vicinity thereof.

The steel sheet A, the steel sheet B, the steel sheet C, and the steel sheet D were subjected to cold-press forming, end surfaces were welded to each other, and thus rectangular tube members of 300 mm in height, formed of the steel sheets, were obtained.

In the steel sheet A, the metallographic structure was the same in a thickness middle portion and a surface layer portion. Therefore, the standard deviation of hardness frequency distribution in the thickness middle portion in the reference flat part and the standard deviation of hardness frequency distribution in the surface layer portion in the reference flat part were the same, and the hardness standard deviation ratio was 1.0. Meanwhile, in the steel sheet B, the steel sheet C, and the steel sheet D, the metallographic structure in the thickness middle portion was not modified, but the metallographic structure in the surface layer portion was modified to change the hardness frequency distribution in the surface layer portion, so that the standard deviation in the surface layer portion was adjusted. As a result, the hardness standard deviation ratio of the surface layer portion to the thickness middle portion in the reference flat part of the steel sheet B was 2.37, the hardness standard deviation ratio in the reference flat part of the steel sheet C was 1.25, and the hardness standard deviation ratio in the reference flat part of the steel sheet D was 1.28.

Table 1 shows material characteristics in the flat parts after press forming.

[Table 1]

| Steel Sheet Used | Strength grade | Yield tress $\sigma_y$ (MPa) | Young's Modulus E (MPa) | Poisson's Ratio $v$ | Sheet Thickness (mm) | Hardness in Center in Sheet Thickness (Hv) | Hardness Standard Deviation in Thickness Middle Portion | Hardness Standard Deviation in Surface Layer Portion | Hardness Standard Deviation Ratio | Effective Width $W_c$ (mm) |
|---|---|---|---|---|---|---|---|---|---|---|
| Steel Sheet A (Material of Related Art) | 1470 MPa grade | 1130 | 205800 | 0.3 | 1.6 | 506 | 14.2 | 14.3 | 1.0 | 41 |
| Steel Sheet B (Modified Material) | 1470 MPa grade | 1105 | 205800 | 0.3 | 1.6 | 494 | 14.3 | 33.9 | 2.37 | 41 |
| Steel Sheet C (Modified Material) | 1180 MPa grade | 880 | 205800 | 0.3 | 1.6 | 395 | 13.8 | 17.2 | 1.25 | 46 |
| Steel Sheet D (Modified Material) | 980 MPa grade | 670 | 205800 | 0.3 | 1.6 | 300 | 12.5 | 16 | 1.28 | 53 |

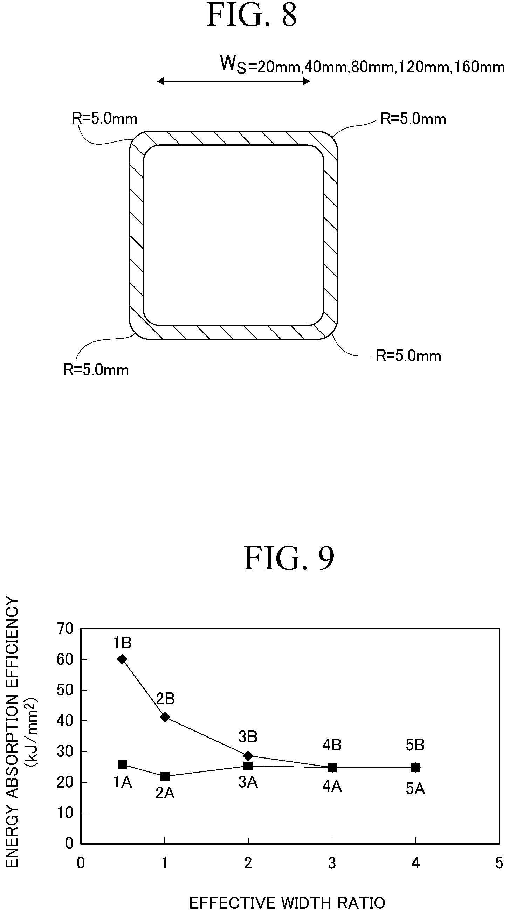

As shown in FIG. 8, a cross section of the rectangular tube member perpendicular to the longitudinal direction was designed to have a substantially square shape in which four flat parts had the same width. That is, in each rectangular tube member, all of the four flat parts are reference flat parts where the effective width ratio is maximum. On the premise of such conditions, a width Ws of the reference flat part was set for each experimental example.

The radii of curvature of four corner portions C were all designed to be 5 mm.

A rigid flat impactor was allowed to collide with each of the rectangular tube members at a speed of 90 km/h from the upper end side in a state in which the lower end side was completely restricted, and the deformation states at the time of the collision, the states in which fracture occurred, and the absorbed energy calculated from the impactor reaction force (load) and the stroke were compared. Table 2 shows the setting conditions and the results for each experimental example.

[Table 2]

| Experiment No. | Steel Sheet Used | Width $W_s$ (mm) | Effective Width Ratio | Cross Section Area (mm²) | Deformation Continuation Stroke (mm) | Absorbed Energy (kJ) | Energy Absorption Efficiency (kJ/mm²) | Remarks |
|---|---|---|---|---|---|---|---|---|
| No. 1A | A | 20 | 0.5 | 178 | 40 | 4.8 | 26.7 | Comparative Example |
| No. 1B | B | 20 | 0.5 | 178 | 150 | 10.7 | 60.2 | Invention Example |
| No. 2A | A | 40 | 1.0 | 306 | 45 | 6.8 | 22.3 | Comparative Example |
| No. 2B | B | 40 | 1.0 | 306 | 150 | 12.6 | 41.2 | Invention Example |
| No. 2C | C | 40 | 0.87 | 306 | 150 | 10.4 | 33.8 | Invention Example |
| No. 2D | D | 40 | 0.75 | 306 | 150 | 8.0 | 26.2 | Invention Example |
| No. 3A | A | 80 | 2.0 | A 562 | 90 | 14.5 | 25.8 | Comparative Example |
| No. 3B | B | 80 | 2.0 | 562 | 150 | 16.2 | 28.8 | Invention Example |
| No. 4A | A | 120 | 2.9 | 818 | 150 | 20.5 | 25.1 | Comparative Example |
| No. 4B | B | 120 | 2.9 | 818 | 150 | 20.5 | 25.1 | Comparative Example |
| No. 5A | A | 160 | 3.9 | 1074 | 150 | 26.5 | 24.7 | Comparative Example |
| No. 5B | B | 160 | 3.9 | 1074 | 150 | 26.8 | 24.9 | Comparative Example |

Regarding the steel sheet A and the steel sheet B, which are the cold-rolled steel sheets of 1470 MPa-grade, in Experiment Nos. 1A, 2A, and 3A, since the hardness standard deviation ratio was 1.0, it was not possible to obtain good bendability. Fracture occurred in a folded portion during bellows deformation, and the deformation could not continue. As a result, the energy absorption efficiency was inferior. In addition, in Experiment Nos. 4A, 4B, 5A, and 5B, fracture did not occur during bellows deformation. However, since the effective width ratio was high, elastic buckling occurred in the reference flat part, and the axial force could not be exhibited. As a result, the energy absorption efficiency was inferior.

In Experiment Nos. 1B, 2B, and 3B, the hardness standard deviation ratio was appropriately controlled and the effective width ratio was also appropriate. Therefore, even though a 1470 MPa-grade cold-rolled steel sheet was used, neither fracture during bellows deformation nor elastic buckling occurred, and it was possible to exhibit excellent energy absorption efficiency.

FIG. 9 is a graph for comparison of the energy absorption efficiency relative to the effective width ratio based on the experimental results shown in Table 2. As shown in this graph, the energy absorption efficiency is not improved only by reducing the effective width ratio. However, it is found that in a case where the hardness standard deviation ratio is appropriately controlled as in the present application, the energy absorption efficiency is significantly improved by reducing the effective width ratio.

Further, in each of Experiment No. 2C (1180 MPa-grade cold-rolled steel sheet) and Experiment No. 2D (980 MPa-grade cold-rolled steel sheet), the hardness standard deviation ratio was appropriately controlled and the effective width ratio was appropriate. In these Experiment No. 2C and Experiment No. 2D, in comparison with Experiment No. 2B (1470 MPa-grade cold-rolled steel sheet), the strength grade is low and therefore the energy absorption efficiency was inferior, but the fracture or elastic buckling did not occur. Therefore, in comparison with the Experiment No. 2A (1470 MPa-grade cold-rolled steel sheet), it is found that even though the strength grade was low, the energy absorption efficiency was high.

[Industrial Applicability]

According to the present invention, it is possible to provide a frame member having excellent energy absorption efficiency.

[Brief Description of the Reference Symbols]

10, 20 frame member
20A first frame member
20B second frame member
100 vehicle frame

**Claims**

1. A frame member formed by cold-pressing a steel sheet,

   wherein the frame member has a closed cross section portion in which a cross section perpendicular to a longitudinal direction is a closed cross section,
   the closed cross section portion has at least one flat part having a radius of curvature larger than a maximum external dimension of the cross section, and
   when a flat part among the at least one flat part, having such a width that a ratio of the width to an effective width obtained from Karman's effective width formula is maximum, is defined as a reference flat part,
   a Vickers hardness of a thickness middle portion in the reference flat part is 300 Hv or greater,
   a width of the reference flat part is 2.0 times or less the effective width, and
   a standard deviation ratio obtained by dividing a standard deviation of hardness frequency distribution in a surface layer portion in the reference flat part by a standard deviation of hardness frequency distribution in the thickness middle portion in the reference flat part is greater than 1.0.

2. The frame member according to claim 1,
   wherein the closed cross section portion is present in 50% or greater of a whole length of the frame member in the longitudinal direction.

3.  The frame member according to claim 1 or 2,

    wherein the frame member includes a first frame member extending in the longitudinal direction and a second frame member extending in the longitudinal direction and joined to the first frame member, and the closed cross section portion includes the first frame member and the second frame member.

4.  The frame member according to claim 1 or 2,
    wherein the standard deviation ratio is greater than 1.20.

# FIG. 1

BELLOWS
DEFORMATION

LOWER END SIDE
(COMPLETE RESTRICTION)

LOWER END SIDE
(COMPLETE RESTRICTION)

## FIG. 2

## FIG. 3

# FIG. 4

**980 MPa CLASS STEEL SHEET** — VDA BENDING ANGLE RATIO (0 to 1.6). STANDARD DEVIATION RATIO ABOUT 1.0 → STANDARD DEVIATION RATIO 1.28

**1180 MPa CLASS STEEL SHEET** — VDA BENDING ANGLE RATIO (0 to 1.6). STANDARD DEVIATION RATIO ABOUT 1.0 → STANDARD DEVIATION RATIO 1.25

**1470 MPa CLASS STEEL SHEET** — VDA BENDING ANGLE RATIO (0 to 1.6). STANDARD DEVIATION RATIO ABOUT 1.0 → STANDARD DEVIATION RATIO 2.37

FIG. 5

20A

20B

A2

A2

20

FIG. 6

C    21(21c)    C

21(21b)                      21(21d)

C                            C

20A

21(21a)                           21(21e)    1.2mm

0.8mm

23(23a)    C                    C    23(23e)

20B

23(23b)                          23(23d)

C    23(23c)    C    20

$W_S$

# FIG. 7

# FIG. 8

$W_S$=20mm,40mm,80mm,120mm,160mm

R=5.0mm ⎯ ⎯ R=5.0mm

R=5.0mm ⎯ ⎯ R=5.0mm

# FIG. 9

## INTERNATIONAL SEARCH REPORT

| International application No. |
| --- |
| **PCT/JP2022/018966** |

### A. CLASSIFICATION OF SUBJECT MATTER

**B21D 22/26**(2006.01)i; **B62D 21/15**(2006.01)i; **B21C 37/15**(2006.01)i
FI:   B62D21/15 Z; B21D22/26 C; B21C37/15 D

According to International Patent Classification (IPC) or to both national classification and IPC

### B. FIELDS SEARCHED

Minimum documentation searched (classification system followed by classification symbols)

B21D22/26; B62D21/15; B21C37/15

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2020-153401 A (NIPPON STEEL CORP) 24 September 2020 (2020-09-24)<br>paragraphs [0001]-[0056], fig. 1-6 | 1-4 |
| Y | JP 5-195149 A (NKK CORP) 03 August 1993 (1993-08-03)<br>paragraphs [0001]-[0030], fig. 1 | 1-4 |

☐ Further documents are listed in the continuation of Box C.   ☑ See patent family annex.

| | |
| --- | --- |
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **01 June 2022** | **14 June 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/018966**

| Patent document cited in search report | | | Publication date (day/month/year) | Patent family member(s) | Publication date (day/month/year) |
|---|---|---|---|---|---|
| JP | 2020-153401 | A | 24 September 2020 | (Family: none) | |
| JP | 5-195149 | A | 03 August 1993 | (Family: none) | |

Form PCT/ISA/210 (patent family annex) (January 2015)

**EP 4 309 820 A1**

## REFERENCES CITED IN THE DESCRIPTION

**Patent documents cited in the description**

- JP 2021078462 A
- JP 2009286351 A